# EUROPEAN PATENT SPECIFICATION

(11) **EP 2 225 896 B1**
(45) Date of publication and mention of the grant of the patent: **06.07.2016**
(21) Application number: 08868360.2
(22) Date of filing: 06.11.2008
(51) Int. Cl.: H04W 4/04, H04W 4/02, H04W 8/24, H04W 4/18, H04W 4/20

(54) **MOBILE VIRTUAL AND AUGMENTED REALITY SYSTEM**
MOBILES SYSTEM FÜR VIRTUELLE UND ERWEITERTE REALITÄTEN
SYSTÈME MOBILE DE RÉALITÉ VIRTUELLE ET AUGMENTÉE

(30) Priority: 21.12.2007 US 962139
(43) Date of publication of application: 08.09.2010
(73) Proprietor: Motorola Mobility LLC, Libertyville, IL 60048 (US)
(72) Inventor: SCHULER, Francesca,, Des Plaines Illinois 60016 (US); BUHRKE, Eric R.,, Clarendon Hills Illinois 60514 (US); GYORFI, Julius S.,, Vernon Hills Illinois 60061 (US); JONNALAGADDA, Krishna D.,, Algonquin Illinois 60102 (US); LOPEZ, Juan M.,, Chicago Illinois 60661 (US); YU, Han,, Carpentersville Illinois 60110 (US)
(74) Representative: Openshaw & Co.
(86) International application number: PCT/US2008/082549
(87) International publication number: WO 2009/085399

(56) References cited:
- WO-A1-00/22860
- KR-A- 20060 057 150
- US-A1- 2002 177 435
- US-A1- 2005 099 400
- US-A1- 2007 024 527
- US-A1- 2007 032 244
- US-B2- 6 681 107

## Description

### Field of the Invention

The present invention relates generally to messaging, and in particular, to messaging within a mobile virtual and augmented reality system.

### Related Applications

This application is related to Application Serial No. 11/844538, entitled MOBILE VIRTUAL AND AUGMENTED REALITY SYSTEM, filed 8/24/2007, Application Serial No. 11/858997, entitled MOBILE VIRTUAL AND AUGMENTED REALITY SYSTEM, filed 9/21/2007, and to Application Serial No. 11/930974 entitled MOBILE VIRTUAL AND AUGMENTED REALITY SYSTEM, filed 10/31/2007.

### Background of the Invention

Messaging systems have been used for years to let users send and receive messages to each other. Currently, one of the simplest ways to send a message to another individual is to send a text message to the individual's cellular phone. Recently, it has been proposed to expand the capabilities of messaging systems so that subscribers of the network may be given the option of leaving a specific message at a particular location. For example, in US6681107B2, SYSTEM AND METHOD OF ACCESSING AND RECORDING MESSAGES AT COORDINATE WAY POINTS, the author proposes that a subscriber can merely push a button at a specific location causing the device to save the physical location. Then he can push a "record message" button which allows him to speak a message into his device. This message could be directions to the subscriber's house from the specific location or any other personal message. The message is then uploaded to the network where it will become available to other network subscribers. The person creating the message can designate whether the message is available to all subscribers, only the persons stored in the memory of the Subscriber's device, a subset of the persons stored in memory, or even a single person.

US 2007/032244 A1 discloses an arrangement in which an annotation is manually and/or automatically correlated with a location and selectively distributed to participants of an associated user network. Thus, network participants possessing a common bond can obtain "trusted" information regarding specific locations. This allows a network participant to locate resources such as friends, restaurants, hotels, and/or entertainment sites, etc. based on the annotations provided by other network participants for those locations. Network users can annotate locations with temporal information, text, audio/video, photos, and/or graphics, etc. The annotations can be provided to the network via mobile devices and/or via non-mobile devices. Annotation information can be entered before a user visits a location, while a user is visiting a particular location, and/or after a user has visited a location. Location coordinates can be automatically provided and/or manually entered. Annotations are correlated with locations and made selectively available to network participants. Annotation retrieval can occur automatically and/or manually by participants.

WO 00/22860 A1 discloses a method and a system for transmitting data between communication units. In particular, a method and a system for use in wireless communication networks. Even more particular, a method and a system for automatic notification of a user "A" of the entry of pre-selected user "B" into a pre-determined area (or proximity to a particular location). The notification may further depend on a successful match of user specified parameters. The location of users "A" and "B" is determined by reference to the position of their personal wireless communication unit, such as a mobile telephone or a pager.

In order to enhance the user's experience with the above-type of context-aware messaging system, the types of information provided to the users must go beyond simple text, images, and video. Therefore, a need exists for a method and apparatus for messaging within a context-aware messaging system that enhances the user's experience.

### Brief Description of the Drawings

FIG. 1 is a block diagram of a context-aware messaging system.
FIG. 2 illustrates an augmented reality scene.
FIG. 3 is a block diagram of the server of FIG. 1.
FIG. 4 is a block diagram of the user device of FIG. 1.
FIG. 5 is a flow chart showing operation of the server of FIG. 1.
FIG. 6 is a flow chart showing operation of the user device of FIG. 1 when creating static graffiti.
FIG. 7 is a flow chart showing operation of the user device of FIG. 1 when creating non-static graffiti.
FIG. 8 is a flow chart showing operation of the user device of FIG. 1.

### Detailed Description of the Drawings

In order to address the above-mentioned need, a method and apparatus for messaging within a mobile virtual and augmented reality system is provided herein. During operation a user can create "virtual graffiti" that will be left for a particular device to view as part of an augmented reality scene. The virtual graffiti will be assigned to either a particular physical location or a part of an object that can be mobile. The virtual graffiti is then uploaded to a network server, along with the location and individuals who are able to view the graffiti as part of an augmented reality scene. When a device that is allowed to view the graffiti is near the location, the graffiti will be downloaded to the device and displayed as part of an augmented reality scene. To further enhance the user experience, the virtual graffiti can be dynamic, changing based on a context. For example, a user may leave a virtual graffiti message that changes with, for example, outside temperature, location, weather conditions, or any other context.

In an augmented reality system, computer generated images, or "virtual images" may be embedded in or merged with the user's view of the real-world environment to enhance the user's interactions with, or perception of the environment. In the present invention, the user's augmented reality system merges any virtual graffiti messages with the user's view of the real world.

As an example, a first user may wish to leave a message for a second user to try a particular menu item at a restaurant. The message may be virtually written on the door of the restaurant, and left for the second user to view. When the second user visits the restaurant, they will receive an indication that virtual graffiti is available for them to view. The message will then appear to the second user on the door of the restaurant when viewed with the second user's augmented reality system. In a similar manner, the user may wish to leave a message for himself.

The present invention encompasses a method for providing a device with virtual graffiti. The method comprises the steps of receiving information representing virtual graffiti from a first device along with the location of the virtual graffiti, receiving a location of a second device, and determining that a context trigger has been met. The second device is provided with the virtual graffiti when the location of the second device is near the location of the virtual graffiti and the context trigger has been met.

The present invention encompasses a method comprising the steps of wirelessly receiving from a first device, virtual graffiti, the location of the first device, and a list of devices with privileges to view the virtual graffiti, storing the virtual graffiti, the location of the first device, and the list of devices with privileges to view the virtual graffiti, periodically receiving locations from the devices with privileges to view the virtual graffiti, periodically receiving a location of the first device,
determining that a second device is near the location of the first device, wherein the second device is on the list of devices with privileges to view the virtual graffiti, determining that a context trigger has been met, and wirelessly providing the second device with the virtual graffiti when the second device is near the location of the first device and the context trigger has been met.

The present invention additionally encompasses an apparatus comprising a receiver receiving virtual graffiti from a first device along with the location of the virtual graffiti, a personal object manager receiving a location of a second device and determining that a context trigger has been met, and a transmitter providing the second device with the virtual graffiti when the location of the second device is near the location of the virtual graffiti and the context trigger has been met.

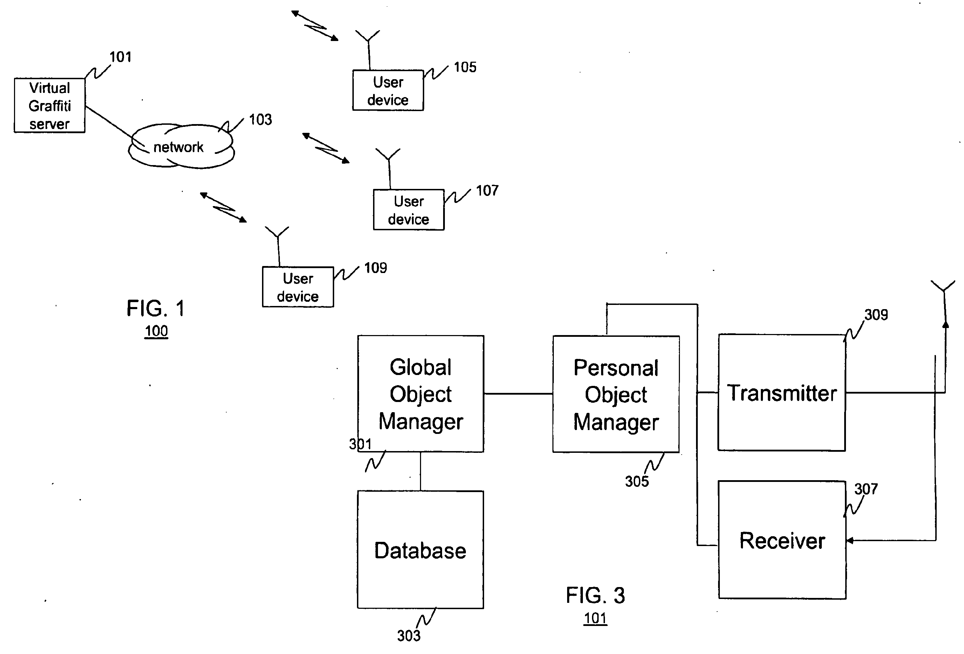

Turning now to the drawings, wherein like numerals designate like components, FIG. 1 is a block diagram of context-aware messaging system 100. System 100 comprises virtual graffiti server 101, network 103, and user devices 105-109. In one embodiment of the present invention, network 103 comprises a next-generation cellular network, capable of high data rates. Such systems include the enhanced Evolved Universal Terrestrial Radio Access (UTRA) or the Evolved Universal Terrestrial Radio Access Network (UTRAN) (also known as EUTRA and EUTRAN) within 3GPP, along with evolutions of communication systems within other technical specification generating organizations (such as 'Phase 2' within 3GPP2, and evolutions of IEEE 802.11, 802.16, 802.20, and 802.22). User devices 105-109 comprise devices capable of real-world imaging and providing the user with the real-world image augmented with virtual graffiti.

During operation, a user (e.g., a user operating user device 105) determines that he wishes to send another user virtual graffiti as part of an augmented reality scene. User device 105 is then utilized to create the virtual graffiti and associate the virtual graffiti with a location. The user also provides device 105 with a list of user(s) (e.g., user 107) that will be allowed to view the virtual graffiti. Device 105 then utilizes network 103 to provide this information to virtual graffiti server 101.

Server 101 periodically monitors the locations of all devices 105-109 along with their identities, and when a particular device is near a location where it is to be provided with virtual graffiti, server 101 utilizes network 103 to provide this information to the device. When a particular device is near a location where virtual graffiti is available for viewing, the device will notify the user, for example, by beeping. The user can then use the device to view the virtual graffiti as part of an augmented reality scene. Particularly, the virtual graffiti will be embedded in or merged with the user's view of the real-world. It should be noted that in alternate embodiments, no notification is sent to the user. It would then be up to the user to find any virtual graffiti in his environment.

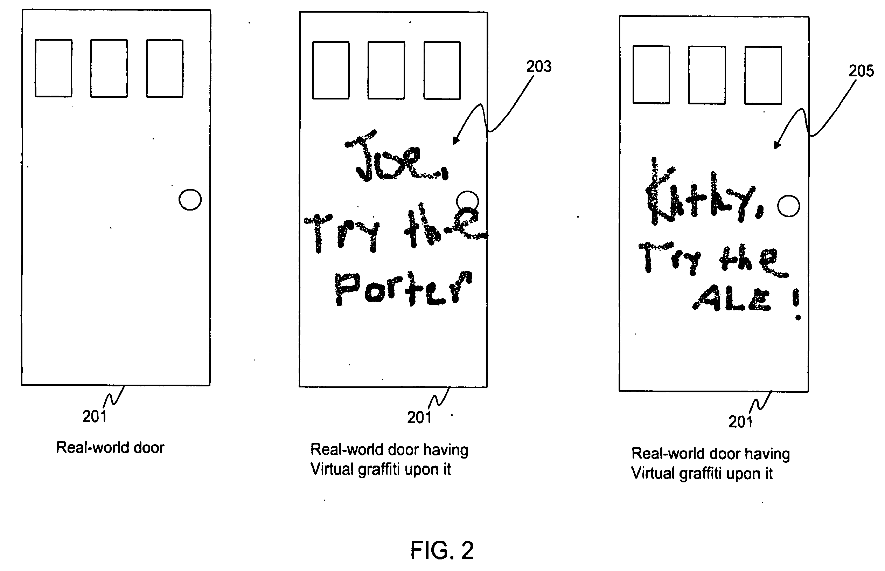

FIG. 2 illustrates an augmented reality scene. In this example, a user has created virtual graffiti 203 that states, "Joe, try the porter" and has attached this graffiti to the location of a door. As is shown in FIG. 2, the real-world door 201 does not have the graffiti existing upon it. However, if a user has privileges to view the virtual graffiti, then their augmented reality viewing system will show door 201 having graffiti 203 upon it. Thus, the virtual graffiti is *not* available to all users of system 100. The graffiti is only available to those designated able to view it (preferably by the individual who created the graffiti). Each device 105-109 will provide a unique augmented reality scene to their user. For example, a first user may view a first augmented reality scene, while a second user may view a totally different augmented reality scene. This is illustrated in FIG. 2 with graffiti 205 being different than graffiti 203. Thus, a first user, looking at door 201 may view graffiti 203, while a second user, looking at the same door 201 may view graffiti 205.

Although the above example was given with virtual graffiti 203 displayed on a particular object (i.e., door 201), in alternate embodiments of the present invention, virtual graffiti may be displayed not attached to any object. For example, graffiti may be displayed as floating in the air, or simply in front of a person's field of view.

As is evident, for any particular device 105-109 to be able to display virtual graffiti attached to a particular object, a node must be capable of identifying the object's location, and then displaying the graffiti at the object's location. There are several methods for accomplishing this task. In one embodiment of the present invention, this is accomplished via the technique described in US2007/0024527, METHOD AND DEVICE FOR AUGMENTED REALITY MESSAGE HIDING AND REVEALING by the augmented reality system using vision recognition to attempt to match the originally created virtual graffiti to the user's current environment. For example, the virtual graffiti created by a user may be uploaded to server 101 along with an image of the graffiti's surroundings. The image of the graffiti's surroundings along with the graffiti can be downloaded to a user's augmented reality system, and when a user's surroundings match the image of the graffiti's surroundings, the graffiti will be appropriately displayed.

In another embodiment of the present invention the attachment of the virtual graffiti to a physical object is accomplished by assigning the physical coordinates of the physical object (assumed to be GPS, but could be some other system) to the virtual graffiti. The physical coordinates must be converted into virtual coordinates used by the 3D rendering system that will generate the augmented reality scene (one such 3D rendering system is the Java Mobile 3D Graphics, or M3G, API specifically designed for use on mobile devices). The most expedient way to accomplish the coordinate conversion is to set the virtual x coordinate to the longitude, the virtual y coordinate to the latitude, and the virtual z coordinate to the altitude thus duplicating the physical world in the virtual world by placing the origin of the virtual coordinate system at the center of the earth so that the point (0,0,0) would correspond the point where the equator and the prime meridian cross, projected onto the center of the earth. This would also conveniently eliminate the need to perform computationally expensive transformations from physical coordinates to virtual coordinates each time a virtual graffiti message is processed.

As previously mentioned, the physical coordinate system is assumed to be GPS, but GPS may not always be available (e.g., inside buildings). In such cases, any other suitable location system can be substituted, such as, for example, a WiFi-based indoor location system. Such a system could provide a location offset (xₒ,yₒ,zₒ) from a fixed reference point (xᵣ,yᵣ,zᵣ) whose GPS coordinates are known. Whatever coordinate system is chosen, the resultant coordinates will always be transformable into any other coordinate system.

After obtaining the virtual coordinates of the virtual graffiti, a viewpoint must be established for the 3D rendering system to be able to render the virtual scene. The viewpoint must also be specified in virtual coordinates and is completely dependent upon the physical position and orientation (i.e., viewing direction) of the device. If the viewpoint faces the virtual graffiti, the user will see the virtual graffiti from the viewpoint's perspective. If the user moves toward the virtual graffiti, the virtual graffiti will appear to increase in size. If the user turns 180 degrees in place to face away from the virtual graffiti, the virtual graffiti will no longer be visible and will not be displayed. All of these visual changes are automatically handled by the 3D rendering system based on the viewpoint.

Given a virtual scene containing virtual graffiti (at the specified virtual coordinates) and a viewpoint, the 3D rendering system can produce a view of the virtual scene unique to the user. This virtual scene must be overlaid onto a view of the real world to produce an augmented reality scene. One method to overlay the virtual scene onto a view of the real world from the mobile device's camera is to make use of an M3G background object which allows any image to be placed behind the virtual scene as its background. Using the M3G background, continuously updated frames from the camera can be placed behind the virtual scene, thus making the scene appear to be overlaid on the camera output.

Given the above information, a device's location is determined and sent to the server. The server determines what messages, if any, are in proximity to and available for the device. These messages are then downloaded by the device and processed. The processing involves transforming the physical locations of the virtual messages into virtual coordinates. The messages are then placed at those virtual coordinates. At the same time, the device's position and its orientation are used to define a viewpoint into the virtual world also in virtual coordinates. If the downloaded virtual message is visible from the given viewpoint, it is rendered on a mobile device's display on top of live video of the scene from the device's camera.

Thus, if the user wants to place a virtual message on the top of an object, the user must identify the location of the point on top of the object where the message will be left. In the simplest case, the user can place his device on the object and capture the location. He then sends this location with the virtual object and its associated content (e.g., a beer stein with the text message "try the porter" applied to the southward-facing side of the stein) to the server. The user further specifies that the message be available for a particular user. When the particular user arrives at the bar and is within range of the message, they will see the message from their location (and, therefore, their viewpoint). If they are looking toward the eastward-facing side of the message, they will see the stein, but will just be able to tell that there is some text message on the southern side. If a user wishes to read the text message, they will have to move their device (and thus his viewpoint) so that it is facing the southern side of the stein.

FIG. 3 is a block diagram of a server of FIG. 1. As is evident, server 101 comprises a global object manager 301, database 303, and personal object manager 305. During operation, global object manager 301 will receive virtual graffiti from any device 105-109 wishing to store graffiti on server 101. This information is preferably received wirelessly through receiver 307. Global object manager 301 is responsible for storing all virtual graffiti existing within system 100. Along with the virtual graffiti, global object manager 301 will also receive a location for the graffiti along with a list of devices that are allowed to display the graffiti. Again, this information is preferably received wirelessly through receiver 307. If the graffiti is to be attached to a particular item (moving or stationary), then the information needed for attaching the virtual graffiti to the object will be received as well. For the first embodiment, a digital representation of a stationary item's surroundings will be stored; for the second embodiment, the physical location of moving or stationary virtual graffiti will be stored. All of the above information is stored in database 303.

Although only one personal object manager 305 is shown in FIG. 3, it is envisioned that each subscriber will have its own personal object manager 305. Personal object manager 305 is intended to serve as an intermediary between its corresponding subscriber and global object manager 301. Personal object manager 305 will periodically receive a location for its corresponding subscriber's device. Once personal object manager 305 has determined the location of the device, personal object manager 305 will access global object manager 301 to determine if any virtual graffiti exists for the particular device at, or near the device's location. Personal object manager 305 filters all available virtual graffiti in order to determine only the virtual graffiti relevant to the particular device and the device's location. Personal object manager 305 then provides the device with the relevant information needed to display the virtual graffiti based on the location of the device, wherein the relevant virtual graffiti changes based on the identity and location of the device. This information will be provided to the device by instructing transmitter 309 to transmit the information wirelessly to the device.

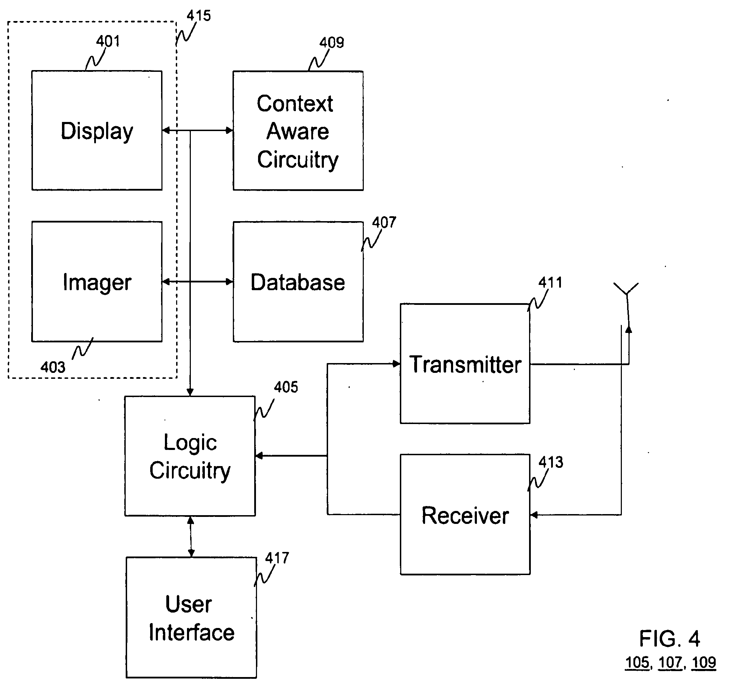

FIG. 4 is a block diagram of a user device of FIG. 1. As shown, the user device comprises augmented reality system 415, context-aware circuitry 409, database 407, logic circuitry 405, transmitter 411, receiver 413, and user interface 417. Context-aware circuitry 409 may comprise any device capable of generating a current context for the user device. For example, context-aware circuitry 409 may comprise a GPS receiver capable of determining a location of the user device. Alternatively, circuitry 409 may comprise such things as a clock, a thermometer capable of determining an ambient temperature, a biometric monitor such as a heart-rate monitor, an accelerometer, a barometer, ... , etc.

During operation, a user of the device creates virtual graffiti via user interface 417. In one embodiment of the present invention, user interface 417 comprises an electronic tablet capable of receiving and creating handwritten messages and/or pictures. In another embodiment, the handwritten messages, pictures, avatars, ... etc., are created beforehand and stored in database 407. In yet another embodiment the virtual graffiti is taken directly from context-aware circuitry 409.

Once logic circuitry 405 receives the virtual graffiti from user interface 417 or database 407, logic circuitry 405 accesses context-aware circuitry 409 and determines a location where the graffiti was created (for stationary graffiti) or the device to which the virtual graffiti will be attached (for mobile graffiti). Logic circuitry 405 also receives a list of users with privileges to view the graffiti. This list is also provided to logic circuitry 405 through user interface 417.

In one embodiment of the present invention the virtual graffiti is associated with a physical object. When this is the case, logic circuitry 405 will also receive information required to attach the graffiti to an object. Finally, the virtual graffiti is provided to virtual graffiti server 101 by logic circuitry 405 instructing transmitter 411 to transmit the virtual graffiti, the location, the list of users able to view the graffiti, and if relevant, the information needed to attach the graffiti to an object. As discussed above, server 101 periodically monitors the locations of all devices 105-109 along with their identities, and when a particular device is near a location where it is to be provided with virtual graffiti, server 101 utilizes network 103 to provide this information to the device.

When a particular device is near a location where virtual graffiti is available for viewing, the device will notify the user, for example, by instructing user interface 417 to beep. The user can then use the device to view the virtual graffiti as part of an augmented reality scene. Thus, when the device of FIG. 4 is near a location where virtual graffiti is available for it, receiver 413 will receive the graffiti and the location of the graffiti from server 101. If relevant, receiver 413 will also receive information needed to attach the graffiti to a physical object. This information will be passed to logic circuitry 405 and stored in database 407.

Logic circuitry 405 periodically accesses context-aware circuitry 409 to get updates to its location and provides these updates to server 101. When logic circuitry 405 determines that the virtual graffiti should be displayed, it will notify the user of the fact. The user can then use augmented reality system 415 to display the graffiti. More particularly, imager 403 will image the current background and provide this to display 401. Display 401 will also receive the virtual graffiti from database 407 and provide an image of the current background with the graffiti appropriately displayed. Thus, the virtual graffiti will be embedded in or merged with the user's view of the real-world.

As discussed above, augmented reality system 415 may use vision recognition to attempt to match the originally created virtual graffiti to the user's current environment. When display 401 determines that the user's surroundings match the image of the graffiti's surroundings, the graffiti will be appropriately displayed, for example, attached to a physical object.

### Dynamic Virtual Graffiti

As discussed above, to further enhance the user experience, the virtual graffiti can be dynamic, changing based on a context. For example, a user may leave a virtual graffiti message that changes when a context trigger has been met. The context trigger may comprise one or more sensors exceeding a threshold, fusion and processing of one or more sensors where the context is extracted for the trigger (e.g. activity can be extracted from fusing/processing data from multiple accelerometer sensors, where the activity extracted is the trigger). Such triggers may comprise, for example, environmental conditions (temperature, amount of sunlight, etc.), biometric information (heart rate, hydration, etc.), motion sensors (accelerometers, gyroscopes, etc.), temporal conditions (time, interval, etc.), other applications (e.g. web server servlet, calendar at mobile device, etc.). Some examples of dynamic virtual graffiti are:
- Location Trigger (Graffiti to be displayed only when a user is near a particular location):
   o A Golfer who provides their buddies virtual graffiti comprising a golf ball available for viewing only at a golf course.
- Activity/Gesture Trigger (Graffiti to be displayed only when a user is performing a certain activity):
   o For example, a golfer who provides their current score for viewing when they are playing golf. In this scenario an accelerometer/gyroscope data may be streamed over short range communication from the golf club to the user device which determines that the user is playing golf. The user device sends activity (golf) to server 101 and the server sends the appropriate object and variable text,
   o For example, a user displaying their current heart rate to monitor while working out.
- Time (temporal) trigger (Graffiti to be displayed only during certain time periods):
   o For example, a worker who shows an inspirational quotes as virtual graffiti on a portfolio only during work hours.
- Biometric trigger (Graffiti to be displayed only when certain biometric conditions are met):
   o For example, a user showing their best workout performance as virtual graffiti to other wellness center members only during their workout, for example, when their heart rate is in its target zone for a specific interval and best pace extracted from pedometer (3-axis accelerometer).
- Environmental trigger (Graffiti to be displayed only when an environmental parameter has been met):
   o For example, an advertiser who displays a virtual graffiti message that changes based on outside temperature.
- Task Trigger (Graffiti to be displayed after a task has been completed):
   o For example, a person working out who is rewarded with graffiti after they have kept their heart rate above a certain level for a period of time.
- Any combination of the above:
   In order to supply dynamic virtual graffiti to a user, the creator of the graffiti will have to supply global object manager 301 the contextual "trigger" for the graffiti along with a location for the graffiti and a list of devices that are allowed to display the graffiti. In addition to periodically providing their locations to server 101, users of the system may need to provide other contextual information as well. For example, the current temperature may need to be provided, or certain biometric information may need to be provided.

As discussed above, server 101 periodically monitors the locations of all devices 105-109 along with their identities. When dynamic virtual graffiti is being provided to users, contextual information beyond simple location may also need to be periodically monitored. When a particular device is near a location where it is to be provided with virtual graffiti and when a context trigger is met, server 101 utilizes network 103 to provide graffiti to the device.

Two use cases are envisioned:
1. Use case where "mobile" graffiti changes based on a context trigger (where the context trigger is related to either a device receiving the graffiti or the device that placed/left the graffiti).
2. Use case where "fixed" graffiti changes based on a context trigger (where the context trigger is related to either a device receiving the graffiti or the device that placed/left the graffiti).

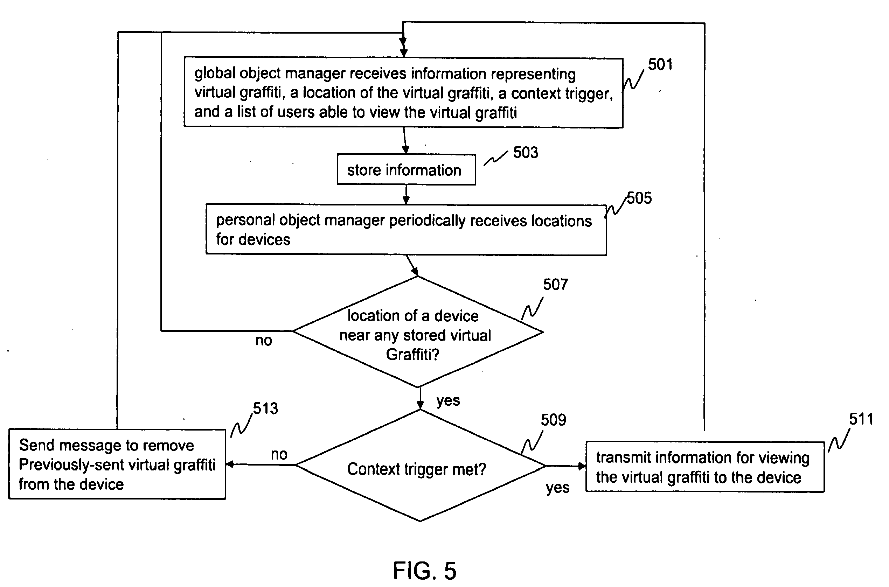

FIG. 5 is a flow chart showing operation of the server of FIG. 1 for the use case where mobile or fixed graffiti changes based on a context trigger (where the context trigger is related to either a device receiving the graffiti or the device that placed/left the graffiti). The logic flow begins at step 501 where global object manager 301 receives from a first device, information representing virtual graffiti, a location of the virtual graffiti, and a list of users able to view the virtual graffiti. When dynamic virtual graffiti is being used, a context trigger is provided to global object manager 301 as well. For example, the trigger may be to simply provide the graffiti to users only when the temperature is above a particular temperature, to provide the graffiti to users only when certain biometric conditions are met, ... , etc.

It should be noted that the information received at step 501 may be updates to existing information. For example, when the virtual graffiti is "mobile", global object manager 301 may receive periodic updates to the location of the graffiti. Also, when the virtual graffiti is changing (e.g., a heart rate) global object manager 301 may receive periodic updates to the graffiti.

Continuing with the logic flow of FIG. 5, information is then stored in database 303 (step 503). As discussed above, personal object manager 305 will periodically receive locations (e.g., geographical regions) for all devices, including the first device (step 505) and determine if the location of a device is near any stored virtual graffiti (step 507). If, at step 507, personal object manager 305 determines that its corresponding device (second device) is near any virtual graffiti (which may be attached to the first device) that it is able to view, then the logic flow continues to step 509 where personal object manager 305 determines if a context trigger has been met. In particular, the step of determining that the context trigger has been met may comprise such things as determining that a location trigger has been met, determining that an activity trigger has been met, determining that a biometric trigger has been met, determining that a temporal trigger has been met (e.g., a time is within a certain time period), determining that an environmental trigger has been met (e.g., a temperature is above a threshold), and determining a task trigger has been met. If the context trigger has been met, the logic flow continues to step 511 where the graffiti and the necessary information for viewing the virtual graffiti (e.g., the location of the graffiti) is wirelessly transmitted to the second device via transmitter 309.

It should be noted that when the virtual graffiti is dynamic, a situation may change so that the graffiti may no longer be available for viewing. For example, an advertisement being displayed if the temperature is above a predetermined level, may no longer be displayed when the temperature drops below the level. In another example, an inspirational quotation viewable only during work hours may become unavailable after working hours. Thus, a user may have already received graffiti to display (temp was above the level, time was within work hours, ... , etc.), yet should no longer be able to display the graffiti since the condition is no longer met (temp below the level, time not within work hours, ... , etc.). With this in mind, if it is determined that a context trigger has not been met at step 509, the logic flow continues to step 513 where a message is transmitted to the device instructing the device to remove the graffiti if it was previously sent. The logic flow then returns to step 501.

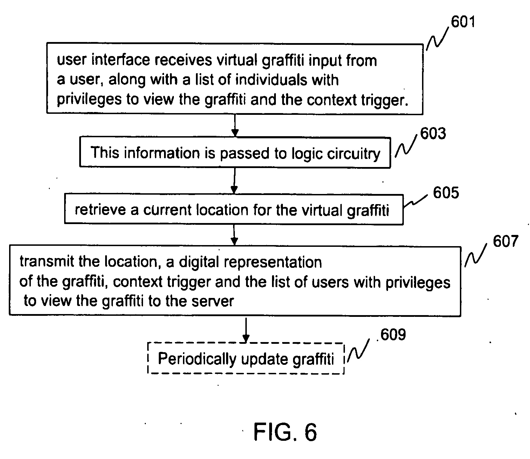

FIG. 6 is a flow chart showing operation of the user device of FIG. 1 when creating non-mobile graffiti that is dynamic (changing in appearance or availability based on a context). In particular, the logic flow of FIG. 6 shows the steps necessary to create virtual graffiti and store the graffiti on server 101 for others to view when certain context triggers are met. The logic flow begins at step 601 where user interface 417 receives virtual graffiti input from a user, along with a list of devices with privileges to view the graffiti, and a context trigger that must be valid for the graffiti to be viewed. The virtual graffiti in this case may be input from a user via user interface 417, or may be graffiti taken from context-aware circuitry 409. For example, when context aware circuitry comprises a heart-rate monitor, the graffiti may be the actual heart rate taken from circuitry 409.

This information is passed to logic circuitry 405 (step 603). At step 605, logic circuitry 405 accesses context-aware circuitry 409 and retrieves a current location for the virtual graffiti. The logic flow continues to step 607 where logic circuitry 405 instructs transmitter 411 to transmit the location, a digital representation (e.g., a .jpeg or .gif image) of the graffiti, the list of users with privileges to view the graffiti, and the context trigger to server 101. It should be noted that in the 3D virtual object case, the digital representation could include URLs to 3D models and content (e.g., photos, music files, etc.). If the virtual graffiti is changing in appearance, the logic flow may continue to optional step 609 where logic circuitry 405 periodically updates the graffiti.

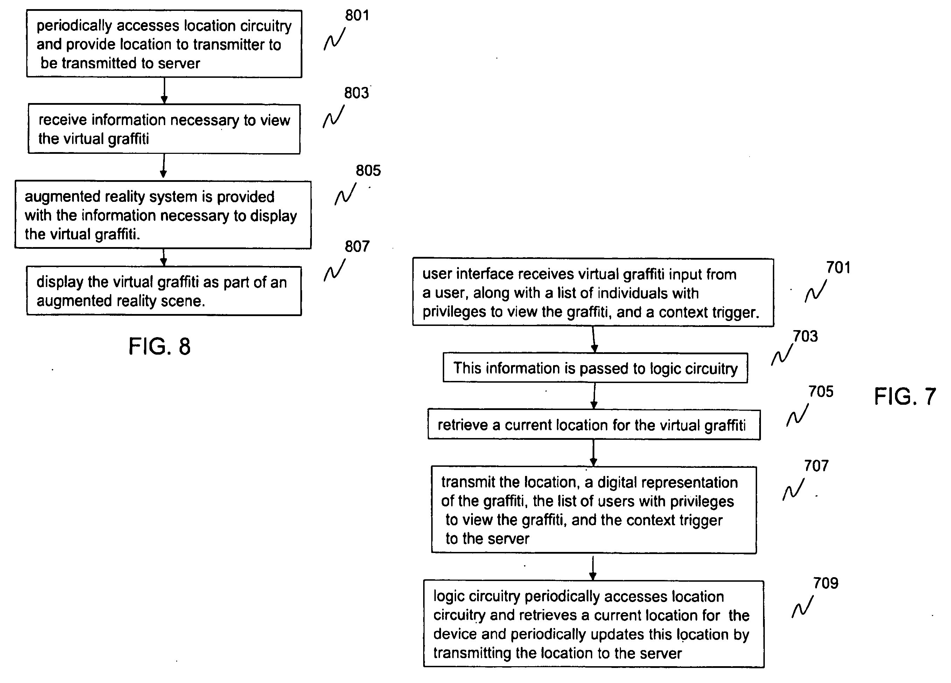

FIG. 7 is a flow chart showing operation of the user device of FIG. 1 when creating mobile graffiti that is dynamic. In particular, the logic flow of FIG. 7 shows the steps necessary to create dynamic virtual graffiti that will be attached to the user's device, and store the graffiti on server 101 for others to view. The logic flow begins at step 701 where user interface 417 receives virtual graffiti input from a user, along with a list of devices with privileges to view the graffiti, and a context trigger indicating under what conditions the graffiti can be viewed. This information is passed to logic circuitry 405 (step 703). At step 705, logic circuitry 405 accesses context-aware circuitry 409 and retrieves a current location for the device, which happens to be the location of the virtual graffiti. The logic flow continues to step 707 where logic circuitry 405 instructs transmitter 411 to transmit the location, a digital representation (e.g., a .jpeg or .gif image) of the graffiti, the context trigger, and the list of users with privileges to view the graffiti to server 101. Finally, at step 709 logic circuitry 405 periodically accesses context-aware circuitry 409 and retrieves a current location for the device and periodically updates this location by transmitting the location to server 101. If the virtual graffiti is changing, periodic updates to the graffiti will additionally take place at step 709. It should be noted that in the preferred embodiment of the present invention the location for the device (and hence the location of the virtual graffiti) is updated only when the device moves in order to save bandwidth. Thus, when the device/virtual graffiti is moving, more frequent updates to the device's location will occur.

FIG. 8 is a flow chart showing operation of the user device of FIG. 1. In particular, the logic flow of FIG. 8 shows those steps necessary to display virtual graffiti. The logic flow begins at step 801 where logic circuitry 405 periodically accesses context-aware circuitry 409 and provides a location to transmitter 411 to be transmitted to server 101. At step 803, receiver 413 receives information necessary to view the virtual graffiti. As discussed above, this information may simply contain a gross location of the virtual graffiti along with a representation of the virtual graffiti. In other embodiments, this information may contain the necessary information to attach the virtual graffiti to an object. Such information may include a digital representation of the physical object, or a precise location of the virtual graffiti. At step 805, logic circuitry 405 accesses augmented reality system 415 and provides system 415 with the information necessary to display the virtual graffiti. For the 3D case, this would include the device's orientation to specify a viewpoint. Finally, at step 807, display 401 displays the virtual graffiti as part of an augmented reality scene.

While the invention has been particularly shown and described with reference to particular embodiments, it will be understood by those skilled in the art that various changes in form and details may be made therein without departing from the spirit and scope of the invention. For example, multiple triggers from multiple categories (biometric, environmental, ... , etc.) can be detected simultaneously where methods of data fusion are required. Graffiti can be displayed based on single or multiple context triggers being met. It is intended that such changes come within the scope of the following claims.

## Claims

1. A method for providing a device with virtual graffiti, the method comprising the steps of:
receiving (i) information representing virtual graffiti, (ii) a context trigger that must be valid for the virtual graffiti to be viewed, and (iii) a list of devices with privileges to view the virtual graffiti from a first device along with the location of the virtual graffiti,
receiving a location of a second device;
determining that the second device is on the list of devices with privileges to view the virtual graffiti;
determining that the context trigger has been met, wherein the context trigger includes at least one of (i) an environmental trigger associated with an environmental parameter, (ii) a task trigger associated with completion of a task by a user of the second device, and (iii) a motion of the second device; and
providing the second device with the virtual graffiti when (i) the second device is on the list of devices with privileges to view the virtual graffiti, (ii) the location of the second device is near the location of the virtual graffiti, and (iii) the context trigger has been met.

2. The method of claim 1 wherein the location of the second device comprises a geographical region where the second device is located.

3. The method of claim 1 wherein the step of providing the device with the virtual graffiti comprises the step of wirelessly transmitting the virtual graffiti to the device.

4. The method of claim 1 further comprising the step of:
providing the second device with a location of the virtual graffiti.

5. The method of claim 1 wherein the step of receiving the location of the second device comprises the step of wirelessly receiving the location from the second device.

6. A method comprising the steps of:
wirelessly receiving from a first device, (i) virtual graffiti, (ii) a context trigger that must be valid for the virtual graffiti to be viewed, (iii) the location of the first device, and (iv) a list of devices with privileges to view the virtual graffiti;
storing the virtual graffiti, the location of the first device, and the list of devices with privileges to view the virtual graffiti;
periodically receiving locations from the devices with privileges to view the virtual graffiti;
periodically receiving a location of the first device;
determining that a second device is near the location of the first device, wherein the second device is on the list of devices with privileges to view the virtual graffiti;
determining that the context trigger has been met, wherein the context trigger includes at least one of (i) an environmental trigger associated with an environmental parameter, (ii) a task trigger associated with completion of a task by a user of the second device, and (iii) a motion of the second device; and
wirelessly providing the second device with the virtual graffiti when (i) the second device is near the location of the first device, (ii) the second device is on the list of devices with privileges to view the virtual graffiti and (iii) the context trigger has been met.

7. An apparatus comprising:
a receiver receiving (i) virtual graffiti from a first device along with (ii) the location of the virtual graffiti, (iii) a context trigger that must be valid for the virtual graffiti to be viewed and (iv) a list of devices with privileges to view the virtual graffiti;
a personal object manager receiving a location of a second device and determining that that the second device is on the list of devices with privileges to view the virtual graffiti and a context trigger has been met, wherein the context trigger includes at least one of (i) an environmental trigger associated with an environmental parameter, (ii) a task trigger associated with completion of a task by a user of the second device, and (iii) a motion of the second device; and
a transmitter providing the second device with the virtual graffiti when (i) the second device is on the list of devices with privileges to view the virtual graffiti, (ii) the location of the second device is near the location of the virtual graffiti, and (iii) the context trigger has been met.

## Patentansprüche

1. Verfahren zum Versorgen einer Vorrichtung mit Virtual Graffiti, wobei das Verfahren die folgenden Schritte umfasst:
Empfangen (i) von Informationen, die Virtual Graffiti darstellen, (ii) von einem Kontexttrigger, der für das Virtual Graffiti gültig sein muss, um angezeigt zu werden, und (iii) einer Liste von Vorrichtungen mit Vorrechten zum Anzeigen des Virtual Graffiti von einer ersten Vorrichtung zusammen mit dem Standort des Virtual Graffiti,
Empfangen eines Standorts einer zweiten Vorrichtung;
Bestimmen, dass sich die zweite Vorrichtung auf der Liste von Vorrichtungen mit Vorrechten zum Anzeigen des Virtual Graffiti befindet;
Bestimmen, dass der Kontexttrigger erfüllt wurde, worin der Kontexttrigger mindestens einen von (i) einem Umgebungstrigger, der mit einem Umgebungsparameter verbunden ist, (ii) einem Aufgabentrigger, der mit dem Abschluss einer Aufgabe durch einen Benutzer der zweiten Vorrichtung verbunden ist, und (iii) einer Bewegung der zweiten Vorrichtung umfasst; und
Versorgen der zweiten Vorrichtung mit dem Virtual Graffiti, wenn (i) sich die zweite Vorrichtung auf der Liste von Vorrichtungen mit Vorrechten zum Anzeigen des Virtual Graffiti befindet, (ii) sich der Standort der zweiten Vorrichtung in der Nähe des Standorts des Virtual Graffiti befindet, und (iii) der Kontexttrigger erfüllt wurde.

2. Verfahren nach Anspruch 1, wobei der Standort der zweiten Vorrichtung einen geografischen Bereich umfasst, in dem die zweite Vorrichtung positioniert ist.

3. Verfahren nach Anspruch 1, worin der Schritt des Versorgens der zweiten Vorrichtung mit dem Virtual Graffiti den Schritt des drahtlosen Übertragens des Virtual Graffiti auf die Vorrichtung umfasst.

4. Verfahren nach Anspruch 1, weiterhin umfassend den Schritt des:
Bereitstellens eines Standorts des Virtual Graffiti gegenüber der zweiten Vorrichtung.

5. Verfahren nach Anspruch 1, worin der Schritt des Empfangens des Standorts der zweiten Vorrichtung den Schritt des drahtlosen Empfangens des Standorts von der zweiten Vorrichtung umfasst.

6. Verfahren, umfassend die Schritte des:
drahtlosen Empfangens von einer ersten Vorrichtung, von (i) Virtual Graffiti, (ii) einem Kontexttrigger, der gültig sein muss, damit das Virtual Graffiti angezeigt wird, (iii) dem Standort der ersten Vorrichtung, und (iv) einer Liste von Vorrichtungen mit Vorrechten zum Anzeigen des Virtual Graffiti;
Speicherns des Virtual Graffiti, des Standorts der ersten Vorrichtung und der Liste von Vorrichtungen mit Vorrechten zum Anzeigen des Virtual Graffiti;
regelmäßigen Empfangens von Standorten von den Vorrichtungen mit Vorrechten zum Anzeigen des Virtual Graffiti;
regelmäßigen Empfangens eines Standorts der ersten Vorrichtung;
Bestimmens, dass sich eine zweite Vorrichtung in der Nähe des Standorts der ersten Vorrichtung befindet, worin sich die zweite Vorrichtung auf der Liste von Vorrichtungen mit Vorrechten zum Anzeigen des Virtual Graffiti befindet;
Bestimmen, dass der Kontexttrigger erfüllt wurde, worin der Kontexttrigger mindestens einen von (i) einem Umgebungstrigger, der mit einem Umgebungsparameter verbunden ist, (ii) einem Aufgabentrigger, der mit dem Abschluss einer Aufgabe durch einen Benutzer der zweiten Vorrichtung verbunden ist, und (iii) einer Bewegung der zweiten Vorrichtung umfasst; und
drahtlosen Versorgens der zweiten Vorrichtung mit dem Virtual Graffiti, wenn (i) sich die zweite Vorrichtung in der Nähe des Standorts der ersten Vorrichtung befindet, (ii) sich die zweite Vorrichtung auf der Liste von Vorrichtungen mit Vorrechten zum Anzeigen des Virtual Graffiti befindet und (iii) der Kontexttrigger erfüllt wurde.

7. Vorrichtung, umfassend:
einen Empfänger, der (i) Virtual Graffiti von einer ersten Vorrichtung zusammen mit (ii) dem Standort des Virtual Graffiti empfängt, (iii) einen Kontexttrigger, der gültig sein muss, damit das Virtual Graffiti angezeigt wird, und (iv) eine Liste von Vorrichtungen mit Vorrechten zum Anzeigen des Virtual Graffiti;
einen persönlichen Objekt-Manager, der einen Standort einer zweiten Vorrichtung empfängt und bestimmt, dass sich die zweite Vorrichtung auf der Liste von Vorrichtungen mit Vorrechten zum Anzeigen des Virtual Graffiti befindet und ein Kontexttrigger erfüllt wurde, wobei der Kontexttrigger mindestens einen von (i) einem Umgebungstrigger, der mit einem Umgebungsparameter verbunden ist, (ii) einem Aufgabentrigger, der mit dem Abschluss einer Aufgabe durch einen Benutzer der zweiten Vorrichtung verbunden ist, und (iii) einer Bewegung der zweiten Vorrichtung umfasst; und
einen Sender, der die zweite Vorrichtung mit dem Virtual Graffiti versorgt, wenn (i) sich die zweite Vorrichtung auf der Liste von Vorrichtungen mit Vorrechten zum Anzeigen des Virtual Graffiti befindet, (ii) sich der Standort der zweiten Vorrichtung in der Nähe des Standorts des Virtual Graffiti befindet, und (iii) der Kontexttrigger erfüllt wurde.

## Revendications

1. Procédé de fourniture d'un dispositif comportant un graffiti virtuel, le procédé comprenant les étapes consistant en :
la réception (i) d'informations représentant un graffiti virtuel, (ii) un déclencheur contextuel qui doit être valide pour le graffiti virtuel à afficher, et (iii) une liste des dispositifs avec des privilèges pour afficher le graffiti virtuel à partir d'un premier dispositif ainsi que l'emplacement du graffiti virtuel,
la réception d'un emplacement d'un second dispositif ;
la détermination que le second dispositif est sur la liste des dispositifs avec des privilèges pour afficher le graffiti virtuel ;
la détermination que le déclencheur contextuel a été validé, où le déclencheur contextuel comprend au moins l'un de (i) un déclencheur environnemental associé à un paramètre environnemental, (ii) un déclencheur de tâche associé à l'achèvement d'une tâche par un utilisateur du second dispositif, et (iii) un mouvement du second dispositif ; et
la fourniture du graffiti virtuel au second dispositif lorsque (i) le second dispositif est sur la liste des dispositifs avec des privilèges pour afficher le graffiti virtuel, (ii) l'emplacement du second dispositif est à proximité de l'emplacement du graffiti virtuel, et (iii) le déclencheur contextuel a été validé.

2. Procédé selon la revendication 1, dans lequel l'emplacement du second dispositif comprend une zone géographique dans laquelle le second dispositif est situé.

3. Procédé selon la revendication 1, dans lequel l'étape consistant en la fourniture du graffiti virtuel au dispositif comprend l'étape consistant en la transmission sans fil du graffiti virtuel au dispositif.

4. Procédé selon la revendication 1, comprenant en outre l'étape consistant en :
la fourniture d'un emplacement du graffiti virtuel au second dispositif.

5. Procédé selon la revendication 1, dans lequel l'étape consistant en la réception de l'emplacement du second dispositif comprend l'étape consistant en la réception sans fil de l'emplacement à partir du second dispositif.

6. Procédé comprenant les étapes consistant en :
la réception sans fil à partir d'un premier dispositif, (i) un graffiti virtuel, (ii) un déclencheur contextuel qui doit être valide pour que le graffiti virtuel soit affiché, (iii) l'emplacement du premier dispositif, et (iv) une liste des dispositifs avec des privilèges pour afficher le graffiti virtuel ;
le stockage du graffiti virtuel, de l'emplacement du premier dispositif, et de la liste des dispositifs avec des privilèges pour afficher le graffiti virtuel ;
la réception périodique des emplacements des dispositifs avec des privilèges pour afficher le graffiti virtuel ;
la réception périodique un emplacement du premier dispositif ;
la détermination qu'un second dispositif est à proximité de l'emplacement du premier dispositif, où le second dispositif est sur la liste des dispositifs avec des privilèges pour afficher le graffiti virtuel ;
la détermination que le déclencheur contextuel a été validé, où le déclencheur contextuel comprend au moins l'un de (i) un déclencheur environnemental associé à un paramètre environnemental, (ii) un déclencheur de tâche associé à l'achèvement d'une tâche par un utilisateur du second dispositif, et (iii) un mouvement du second dispositif ; et
la fourniture sans fil du graffiti virtuel au second dispositif lorsque (i) le second dispositif est à proximité de l'emplacement du premier dispositif, (ii) le second dispositif est sur la liste des dispositifs avec des privilèges pour afficher le graffiti virtuel et (iii) le déclencheur contextuel a été validé.

7. Appareil comprenant :
un récepteur recevant (i) un graffiti virtuel à partir d'un premier dispositif avec (ii) l'emplacement du graffiti virtuel, (iii) un déclencheur contextuel qui doit être valide pour le graffiti virtuel à afficher et (iv) une liste des dispositifs avec des privilèges pour afficher le graffiti virtuel ;
un gestionnaire d'objets personnels recevant un emplacement d'un second dispositif et la détermination que le second dispositif est sur la liste des dispositifs avec des privilèges pour afficher le graffiti virtuel et un déclencheur contextuel a été validé, où le déclencheur contextuel comprend au moins l'un de (i) un déclencheur environnemental associé à un paramètre environnemental, (ii) un déclencheur de tâche associé à l'achèvement d'une tâche par un utilisateur du second appareil, et (iii) un mouvement du second dispositif ; et
un émetteur fournissant le graffiti virtuel au second dispositif lorsque (i) le second dispositif est sur la liste des dispositifs avec des privilèges pour afficher le graffiti virtuel, (ii) l'emplacement du second dispositif est à proximité de l'emplacement du graffiti virtuel, et (iii) le déclencheur contextuel a été validé.
